(19) Europäisches Patentamt / European Patent Office / Office européen des brevets

(11) **EP 1 763 653 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(21) Anmeldenummer: **05752737.6**

(22) Anmeldetag: **09.06.2005**

(51) Int Cl.:
***G01B 7/06*** *(2006.01)*

(86) Internationale Anmeldenummer:
**PCT/EP2005/052660**

(87) Internationale Veröffentlichungsnummer:
**WO 2006/003070 (12.01.2006 Gazette 2006/02)**

(54) **VERFAHREN UND VORRICHTUNG ZUR MATERIALSTÄRKENBESTIMMUNG AUF HOCHFREQUENZBASIS**

METHOD AND DEVICE FOR DETERMINING THE THICKNESS OF MATERIAL ON THE BASIS OF HIGH FREQUENCIES

PROCEDE ET DISPOSITIF DE DETERMINATION DE L'EPAISSEUR DE MATERIAUX A BASE DE HAUTES FREQUENCES

(84) Benannte Vertragsstaaten:
**DE FR GB**

(30) Priorität: **30.06.2004 DE 102004031626**

(43) Veröffentlichungstag der Anmeldung:
**21.03.2007 Patentblatt 2007/12**

(73) Patentinhaber: **ROBERT BOSCH GMBH**
**70442 Stuttgart (DE)**

(72) Erfinder:
• **MAHLER, Michael**
**70771 Leinfelden-Echterdingen (DE)**
• **HOFFMANN, Ulli**
**75223 Nieffern-Oeschelbronn (DE)**
• **KRAPF, Reiner**
**72770 Reutlingen (DE)**
• **WIELAND, Christoph**
**71083 Herrenberg-Kuppingen (DE)**
• **WEWERS, Felix**
**52062 Aachen (DE)**

(56) Entgegenhaltungen:
WO-A-96/30771    DE-A1- 3 425 811
US-A- 3 704 413    US-A- 3 815 016

**Beschreibung**

Die Erfindung betrifft ein Verfahren sowie eine Vorrichtung zur werkstoffdurchdringenden Materialstärkenbestimmung, insbesondere ein Verfahren bzw. eine Vorrichtung zur Vermessung der Dicke von Wänden, Decken und Böden.

Stand der Technik

Aus der US 5,434,500 ist ein Magnetfeldgenerator nebst Detektor mit Positionsindikator bekannt, bei dem der Magnetfeldgenerator als Sendeeinheit dient, die auf eine erste Seite einer Wand an der zu lokalisierenden Stelle aufgesetzt wird und an dieser Stelle ein Magnetfeld erzeugt. Der zugehörige Detektor dient als Empfangseinheit und wird über die der Sendeeinheit abgewandten Oberfläche der Wand geführt. Die Empfangseinheit besitzt dabei zwei Paare von jeweils zwei Detektoren, welche die relative Stärke des Magnetfeldes messen. Durch Messung dieser relativen Stärke des Magnetfeldes für jeden der einzelnen Detektoren wird es ermöglicht, die Position des Magnetfeldgenerators bzw. die Projektion dieser Position auf die dem Generator abgewandten Seite der Wand zu lokalisieren. Bei der Vorrichtung der US 5,434,500 wird die Stärke des detektierten Magnetfeldes mittels einer optischen Anzeige visualisiert. Ist die Stärke des detektierten Magnetfeldes für alle vier Detektionselemente gleich groß, so ist die Empfangseinheit direkt gegenüber der Sendeeinheit angeordnet. Eine quantitative Vermessung der Wandstärke ist bei der Vorrichtung der US 5,434,500 jedoch nicht vorgesehen.

Aus der DE 34 46 392 A1 ist ein Verfahren zur Identifizierung einer auf einer Seite einer Wandung vorhandenen Prüfstelle auf der anderen Seite der Wandung bekannt. Bei diesem Verfahren, welches insbesondere bei metallischen Wandungen eines Behälters genutzt wird, ist zur Beschleunigung der Identifizierung der Prüfstelle und zur Erhöhung der Lagesicherheit der Identifizierung vorgesehen, dass an der Prüfstelle auf die Wandung ein Magnetpol aufgesetzt wird und auf der anderen, dem Magnetpol abgewandten Seite der Wandung das die Wandung durchsetzende Magnetfeld des Magnetpols erfasst wird. Zur Erfassung des Magnetfeldes wird bei dem Verfahren der DE 34 46 392 A1 vorzugsweise ein Hall-Effekt-Bauelement verwendet.

Die bekannten Geräte des Standes der Technik haben u. a. den Nachteil, dass im Werkstoff, wie beispielsweise einer Wand, einer Decke oder eines Bodens befindliche Metallteile, wie beispielsweise Stahlträger oder Armierungseisen die Detektion stark stören und mitunter sogar unmöglich machen können. Darüber hinaus ist die Positionierungsgenauigkeit derartiger Geräte eher schlecht.

Aus der WO 96 / 30771 ist ein elektromagnetischer Nahfeldsensor und ein Verfahren zu seinem Betrieb bekannt. Der Sensor der WO 96 /30771 umfasst einen Sender, der eine Folge elektromagnetischer Signale als Reaktion auf ein Sendetaktsignal übermittelt und einen Empfänger, der die Folge von Signalen als Reaktion auf ein Empfangssignal abtastet und ein abgetastetes Signal erzeugt. Des Weiteren besitzt der Sensor eine Taktschaltung, die das Sendetaktsignalen Sende und das Empfangstaktsignal dem Empfänger zuführt, wobei das Empfangstaktsignal den Empfänger torsteuert, so dass ein Abschnitt jedes elektromagnetischen Signals abgetastet wird, das entlang eines direkten Hochfrequenzpfades zwischen dem Sender und dem Empfänger verläuft. Mit der Vorrichtung der D1 ist es möglich. Eigenschaften, wie die Dichte von Objekten, zu bestimmen. Auch eignet sich der Sensor der D1 zur Hinderniserkennung oder zur Zugangskontrolle, indem der Pfad zwischen Sender und Empfänger unterbrochen wird und diese Unterbrechung detektiert wird.

Aufgabe der vorliegenden Erfindung ist es daher, ein Verfahren bzw. eine Vorrichtung anzugeben, welches eine schnelle, sichere und präzise Bestimmung von Materialstärken gestattet.

Die Aufgabe wird erfindungsgemäß durch ein Verfahren mit den Merkmalen des Anspruchs 1 gelöst. Darüber hinaus wird die Aufgabe gelöst durch eine Vorrichtung mit den Merkmalen des Anspruchs 9.

Vorteile der Erfindung

Das erfindungsgemäße Verfahren zur werkstoffdurchdringenden Materialstärkebestimmung, insbesondere ein solches Verfahren zur Vermessung der Dicke von Wänden, Decken und Böden, nutzt einen Hochfrequenzsender, der ein Messsignal im Gigahertz-Frequenzbereich in den zu untersuchenden Werkstoff einstrahlt, so dass das den Werkstoff durchdringende Messsignal von einem Hochfrequenzempfänger detektiert werden kann. Dabei wird die Materialstärke des Werkstoffs aus zumindest zwei Laufzeitmessungen des Messsignals für verschiedene Orte des Hochfrequenzsenders und/oder des Hochfrequenzempfängers ermittelt.

Dieses Auswerteverfahren zur Materialstärkenbestimmung ermöglicht es, auch ohne die Kenntnis der Wandstärke und/oder der Materialeigenschaften der Wand, wie beispielsweise die Dielektrizitätskonstanten des Werkstoffs der Wand, die Wandstärke zu ermitteln.

Aufgrund des benutzten Hochfrequenzverfahrens lässt sich die Wandstärke mit hoher Genauigkeit ermitteln, da durch den verwendeten Frequenzbereich die Positionierungsgenauigkeit erhöht werden kann. In der Wand enthaltene Fremdkörper, wie beispielsweise Stahlträger oder Armierungseisen bilder dabei kein Hindernis für die Wandstärkenbestimmung Vorteilhafte Weiterbildungen des erfindungsgemäßen Verfahrens bzw. des Vorrichtungssystems zur Durchführung dieses Verfahrens ergeben sich aus den mit den Unteransprüchen aufgeführten Merkmalen.

In vorteilhafter Weise sind der Hochfrequenzsender und der Hochfrequenzempfänger bei der Messung auf einer gemeinsamen, ersten Oberfläche des zu untersuchenden Werkstoffs angeordnet, wobei das den Werkstoff durchdringende Messsignal des Hochfrequenzsenders mittels eines aktiven oder passiven Reflektormittels, der auf einer zweiten Oberfläche des Werkstückes aufbebracht ist, auf den Hochfrequenzempfänger zurückgelenkt wird.

In einer besonders vorteilhaften Ausführungsform des erfindungsgemäßen Verfahrens werden der Hochfrequenzsender und der Hochfrequenzempfänger in einem gemeinsamen Gerät, insbesondere einem handgehaltenen Hochfrequenzmessgerät, betrieben.

In einer Ausführungsform des erfindungsgemäßen Verfahrens wird das Hochfrequenzmessgerät zur Aufnahme der mindestens zwei Laufzeitmessungen über eine Oberfläche des zu untersuchenden Materials verschoben. Dabei wird der zurückgelegte Verschiebeweg des Messgeräts von einem Wegaufnehmersystem detektiert und einer Auswerteeinheit zur Verfügung gestellt.

In vorteilhafter Weise umfasst das Reflektormittel zur Rücksendung des Messsignals zumindest einen Transponder. Dieser Transponder empfängt das werkstoffdurchdringende Hochfrequenzsignal und sendet ein entsprechendes Signal an den Hochfrequenzempfänger zurück.

In vorteilhafter Weise wird das den Werkstoff durchdringende Messsignal mittels Pulsradar-Verfahren im Gigahertz-Frequenzbereich erzeugt und anschließend in den Werkstoff eingekoppelt. Dabei liegen eine oder mehrere Messfrequenzen in einem Intervall von einem Gigahertz bis fünf Gigahertz, und vorzugsweise in einem Intervall von 1,5 GHz bis 3,5 GHz.

Ein Vorrichtungssystem zur Durchführung des erfindungsgemäßen Verfahrens weist in vorteilhafter Weise zumindest ein auf eine Oberfläche eines Werkstoffs aufsetzbares Hochfrequenzmessgerät mit zumindest einem Hochfrequenzsender und einem Hochfrequenzempfänger, sowie einen relativ zu diesem Hochfrequenzmessgerät beweglichen Transponder auf. Das Hochfrequenzmessgerät, welches als Pulsreflektormeter arbeitet, sendet Messsignale mit einer Frequenz im Gigahertzbereich durch den zu vermessenden Werkstoff. Diese Messsignale werden von einem Transponder detektiert und ggf. weiterverarbeitet. Der Transponder sendet dann entsprechende Messsignale an den Hochfrequenzempfänger des Hochfrequenzmessgeräts zurück. Diese durch den Transponder "reflektierten" Messsignale werden hinsichtlich ihrer Laufzeit ausgewertet. Aus zumindest zwei verschiedenen Laufzeitmessungen, die an zwei unterschiedlichen Orten des Werkstoffs vorgenommen werden, wird die Wandstärke des Werkstoffs in vorteilhafter Weise ohne Kenntnis der Materialeigenschaften, insbesondere ohne Kenntnis der Dielektrizitätskonstanten, ermittelt. Zusätzlich zu dem von den Hochfrequenzmessgerät detektierten Laufzeiten der Messsignale wird dazu der Verschiebeweg des Hochfrequenzmessgeräts zwischen den zumindest zwei Positionen der zumindest zwei Laufzeitmessungen detektiert und ausgewertet.

In vorteilhafter Weise verfügt das Hochfrequenzmessgerät aus diesem Grund über eine Wegsensorik, die den Verschiebeweg des Messgeräts zwischen zwei Messorten detektiert und an eine Auswerte- und Steuereinheit des Messgeräts übermittelt. Eine solche Wegsensorik kann den Verfahrweg beispielsweise über entsprechende Rollen oder Räder am Gehäuse des Messgerätes aufnehmen. Bei dem Signalauswerteverfahren wird die vom Pulsreflektormeter zwischen zwei Messorten zurückgelegte Fahrstrecke genutzt, um über die Laufzeit des Messsignals zwischen Pulsreflektormeter und Transponder an zumindest zwei verschiedenen Stellen des untersuchten Werkstoffs dessen Wanddicke zu bestimmen.

Das erfindungsgemäße Verfahren bzw. die erfindungsgemäße Vorrichtung zur Durchführung des Verfahrens ermöglicht so in vorteilhafter Weise, auch ohne die Kenntnis der Wandstärke und insbesondere ohne die Kenntnis von Materialeigenschaften der Wand, die Wandstärke zu ermitteln. Als Geräte sind dazu ein Hochfrequenzmessgerät, beispielsweise ein Wandortungsgerät auf Pulsreflektormeterbasis sowie ein Transponder oder äquivalentes Reflektormittel erforderlich.

Weitere Vorteile des erfindungsgemäßen Verfahrens bzw. der erfindungsgemäßen Vorrichtung sind der nachfolgenden Zeichnung sowie der zugehörigen Beschreibung von vorteilhaften Ausführungsformen zu entnehmen.

Zeichnung

In der Zeichnung sind Ausführungsformen des erfindungsgemäßen Verfahrens bzw. des Vorrichtungssystems zur werkstoffdurchdringenden Materialstärkenbestimmung dargestellt, welche in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die somit als ebenfalls in der Beschreibung offenbart anzusehen sind.

Es zeigen:

Fig. 1    eine schematische Darstellung der dem erfindungsgemäßen Verfahren zugrunde liegende Messanordnung,

Fig. 2    eine schematische Darstellung des erfindungsgemäßen Verfahrens für einen ersten Messort,

Fig. 3    ein erstes Ausführungsbeispiel der wesentlichen elektronischen Komponenten eines Transponders für das erfindungsgemäße Verfahren,

Fig. 4    eine alternative Realisierungsmöglichkeit eines Transponders für das erfindungsgemäße Verfahren,

Fig. 5    eine weitere Realisierung für einen Transponder des erfindungsgemäßen Verfahrens in einer schematischer Darstellung.

Beschreibung der Ausführungsbeispiele

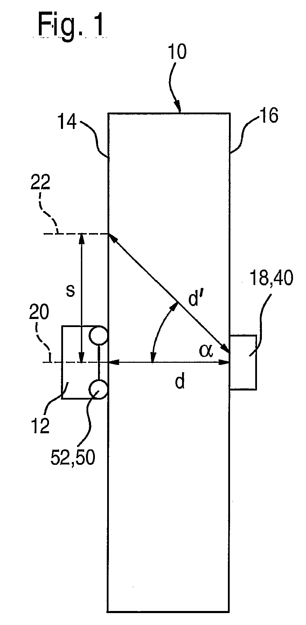

Fig. 1 zeigt eine typische, dem erfindungsgemäßen Verfahren zugrundeliegende Messsituation. Dabei soll die Materialstärke bzw. -dicke d eines Werkstoffes 10, beispielsweise einer Wand, eines Bodens oder einer Decke ermittelt werden, ohne dass spezielle Kenntnisse über die Materialeigenschaften, beispielsweise über die Dielektrizitätskonstante des Materials 10, bekannt sind.

Mit Hilfe eines Hochfrequenzmessgeräts 12, welches als Pulsreflektormeter betrieben wird, und auf eine Oberfläche 14 des zu untersuchenden Wekstückes 10 aufgesetzt wird, wird ein Messsignal im Gigahertz-Frequenzbereich durch das zu untersuchende Material 10 gesendet und mittels eines auf der dem Hochfrequenzmessgerät 12 abgewandten Oberfläche 16 des zu untersuchenden Materials angeordneten Transponder 18 in noch zu beschreibender Weise auf eine Empfangseinheit des Hochfrequenzmessgeräts 12 zurückgeschickt. Aus der Laufzeit des Messignales kann auf die zurückgelegte Strecke und damit auf die Materialstärke geschlossen werden. Im allgemeinen ist dazu die Kenntnis der Ausbreitungsgeschwindigkeit des Messsignal im Material notwendig. Diese wiederum hängt von den Materialeigenschaften und insbesondere von der Dielektrizitätskonstanten des Materials ab.

Wird nun die Laufzeit des Signals zwischen Hochfrequenzmessgerät 12 und Transponder 18 für zumindest zwei verschiedene Messungen an zwei verschiedenen aber bekannten Orten 20 bzw. 22 des Hochfrequenzmessgeräts durchgeführt und ausgewertet, kann mit Hilfe geometrischer Beziehungen die Wanddicke d ermittelt werden, ohne dass die Kenntnis der Materialkonstanten erforderlich ist.

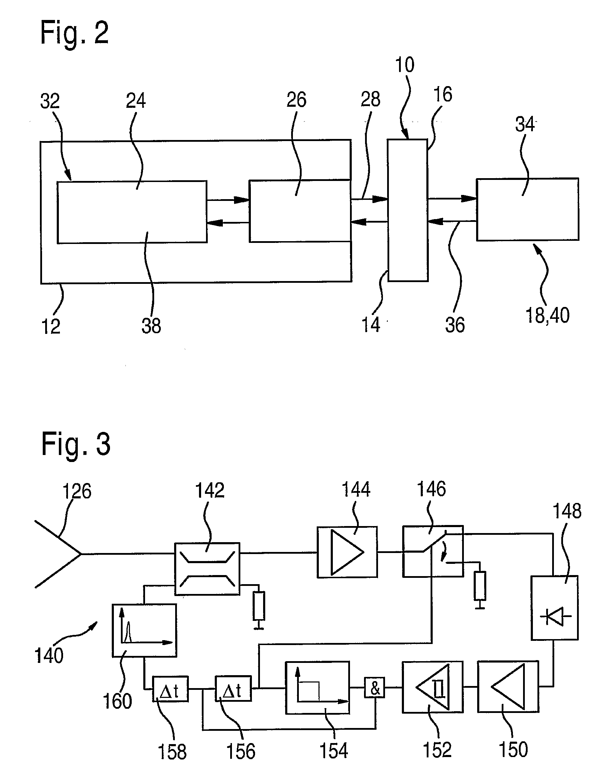

Fig. 2 stellt einige der wesentlichen Verfahrensschritte des erfindungsgemäßen Verfahrens anhand einer Darstellung der Messsituation an einem ersten Messort 20 dar. Eine Hochfrequenzeinheit 32 des Hochfrequenzmessgeräts 12, bestehend zumindest aus einem Hochfrequenzsender 24 und einem Hochfrequenzempfänger 38 erzeugt Mikrowellen im Gigahertz-Frequenzbereich, beispielsweise mittels FMCW oder Pulsradarverfahren. Der HF-Sender 24 kann demnach eine oder mehrere einzelne Frequenzen (FMCW-Verfahren) oder ein breitbandiges Impulsspektrum (Pulsradar) generieren. Das Messsignal 28 liegt im Gigahertz-Frequenzbereich, mit Messfrequenzen, die typischer Weise in einem Intervall von einem Gigahertz bis fünf Gigahertz liegen. Vorzugsweise werden bei dem erfindungsgemäßen Verfahren eine oder mehrere Messfrequenzen aus einem Frequenzintervall von 1,5 GHz bis 3,5 GHz verwendet.

Bei dem erfindungsgemäßen Verfahren wird auf der einen Seite eines Werkstoffs das Hochfrequenzmessgerät 12 an die entsprechende Oberfläche 14 des Werkstoffs gehalten bzw. auf dieser befestigt. Das Hochfrequenzmessgerät 12 weist einen Hochfrequenzsender 24 mit einer Antennenanordnung 26 auf, die vorzugsweise in Richtung des Werkstoffs 10 zeigt und ein hochfrequentes Messsignal 28 in den Werkstoff 10 abstrahlen kann. Die so erzeugten Mikrowellensignale, die das Messsignal 28 bilden, werden über die Antennenanordnung 26, die zumindest eine Antenne umfasst, abgestrahlt. Wird das Hochfrequenzmessgerät 12 auf einer Seite 14 des Werkstoffs 10, beispielsweise einer Wand, einer Decke oder einem Boden an definierter Stelle 20 aufgesetzt, so durchdringen die Mikrowellen als gerichtetes Hochfrequenzsignal 28 die Wand und können durch einen Empfänger 34 eines Reflektormittels 18 auf der anderen Seite 16 des Werkstoffs 10 detektiert werden.

Das Reflektormittel 18 sendet ein um eine interne Laufzeit verschobenes rücklaufendes Messsignal 36 wiederum durch die Wand auf das Hochfrequenzmessgerät 12 zurück.

Das Hochfrequenzmessgerät 12, welches sowohl als Hochfrequenzsender 24 als auch als Hochfrequenzempfänger 38 ausgebildet ist, detektiert das vom Reflektor 18 ausgesendete rücklaufende Messsignal 36 mittels einer Empfangsantenne. Als Sende- bzw. Empfangsantenne des Hochfrequenzmessgeräts 12 lässt sich bei entsprechender Beschaltung ein einzelnes Hochfrequenzantennenelement 26 nutzen. In weiteren Ausführungsformen des erfindungsgemäßen Verfahrens kann jedoch auch eine getrennte Anordnung von Sendeantenne und Empfangsantenne für das Hochfrequenzmessgerät 12 vorgesehen sein.

Auf der dem Hochfrequenzmessgerät 12 abgewandten Seite 16 des Werkstoffs 10 befindet sich das Reflektormittel 18, welches in aktiver bzw. passiver Weise das die Wand 10 durchdringende Messsignal 28 als ein rücklaufendes Messsignal 36 auf eine Empfangseinheit des Hochfrequenzmessgeräts 12 zurückleitet. Ein solches Reflektormittel 18 kann beispielsweise durch einen passiven Reflektor, beispielsweise ein SAW-Element (Surface Acoustic Wave) ausgebildet sein. Das vom Reflektormittel 18 zurückgeleitete Messsignal 36 kann dabei im gleichen Frequenzbereich oder aber auch in einem zum hinlaufenden Messsignal 28 verschobenen Frequenzbereich angeordnet sein.

Als Reflektormittel 18 kann in vorteilhafter Weise ein sogenannter Transponder 40 verwendet werden, der das den Werkstoff 10 durchdringende Messsignal 28 detektieren, verarbeiten und nach einer internen Verzögerungszeit, als ein mit dem detektierten, ursprünglichen Messsignal 28 korreliertes Antwortsignal 36 wiederum durch den Werkstoff 10 zurücksendet.

Fig. 3 zeigt eine erste mögliche Ausführungsform eines solchen Transponders für das erfindungsgemäße Verfahren. Das vom Messgerät 12 erzeugte hochfrequente Wechselfeld durchdringt einen Werkstoff 10, beispielsweise eine zu untersuchende Wand. Auf der dem Messgerät 12 entgegengesetzten Seite dieser Wand befindet sich ein Transponder 140, der die vom Messgerät erzeugten Signale lokalisiert, detektiert und in noch zu beschreibender Weise an das Messgerät zurücksendet.

Ein solcher Transponder erzeugt nach einer gewissen internen und daher bekannten Laufzeit ein neues Signal, welches er über eine eigene Antenne, beispielsweise im ISM-Band bei einer Frequenz von 2,45 GHz abstrahlt. Dieses neu generierte Signal durchdringt wiederum die Wand und kann vom Hochfrequenzempfänger 24 des Messgeräts 12 detektiert werden.

Auf diese Weise kann mit Hilfe des Messgeräts 12, welches ein Pulsreflektometer bildet, ein Laufzeitminimum des neuen Sendesignals des Transponders gefunden werden und die entsprechende Stelle auf der Wand beispielsweise markiert werden. Eine Markiereinheit kann sich sowohl am Messgerät 12 als auch am Transponder 140 befinden. Unter Auswertung der Laufzeit zwischen dem Reflektometer, d.h. dem Messgerät 12, und dem Transponder 140 kann zudem die Wanddickenbestimmung durchgeführt werden.

Im folgenden soll der prinzipielle Aufbau eines solchen Transponders dargelegt werden. Als Empfänger im Transponder eignen sich verschiedene Arten von Hochfrequenzempfängern, wie beispielsweise Leistungsdetektoren, die den Leistungspegel des charakteristischen Messsignals des Messgeräts 12 auswerten oder aber auch Pulsdetektoren, die typische Feldänderungen des Messgeräts 12 detektieren können.

Fig. 3 zeigt den möglichen Aufbau eines solchen Transponders 140 an Hand eines Blockschaltbilds. Das über eine Antenneneinrichtung 126 vom Transponder 140 empfangene Signal wird über einen Koppler 142 oder einen Zirkulator zu einem Empfangsverstärker 144 geleitet. Nach seiner Verstärkung gelangt das Signal über einen im Ruhezustand durchgeschalteten HF-Schalter 146 zu einem Pulsdetektor 148. Dieser liefert eine zur Eingangsleistung proportionale Ausgangsspannung. Die Spannung des Pulsdetektors 148 wird in einem NF-Verstärker 150 verstärkt. In einem nachfolgenden Komparator 152 wird aus dem analogen Spannungssignal wieder ein Digitalsignal generiert. In einem Monoflop 154 wird das relativ kurze Komparatorsignal auf eine definierte Länge gebracht. Dieses Signal wird mit Hilfe der Verzögerungsglieder 156 und 158 zur Austastung der Empfangsstufe und zur Sendeimpulserzeugung genutzt. Das vom Sendeimpulserzeuger 160 generierte Signal wird über den Koppler 142 bzw. einen Zirkulator wieder auf die Antenneneinrichtung 126 gebracht und durch die untersuchte Wand hindurch auf das Messgerät 12 zurückgesandt.

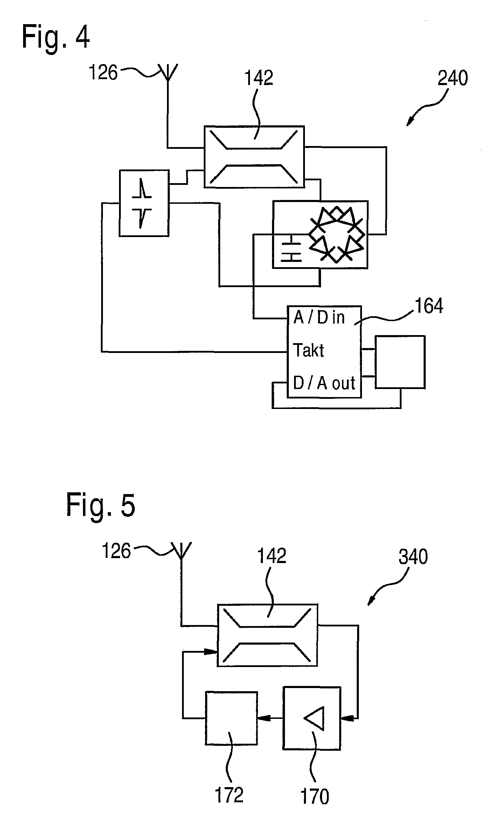

Fig. 4 zeigt eine alternative Realisierungsmöglichkeit eines Transponders 240. Hierbei wird ein Abtaster verwendet. Über einen Mikrocontroller 164 wird der Takt, in dem der Abtaster angesteuert wird, derart geregelt, dass sich am Ausgang des Abtasters eine maximale Spannung einstellt. Ist dieses Maximum des Ausgangssignals erreicht, so laufen der Takt des Mikrocontrollers und der Takt des Messgeräts 12 synchron zueinander, jedoch um die Laufzeit des Messsignals verschoben. Auf diese Weise ist es möglich den Durchdringungsort des Messsignals zu lokalisieren und eine Wanddicken-Messung vorzunehmen. Da das Signal, welches den Abtaster steuert, auch direkt gesendet wird, erfolgt die Antwort des Transponders mit minimaler Verzögerung.

Eine weitere Alternative für den prinzipiellen Aufbau eines Transponders für das erfindungsgemäße Verfahren ist in Fig. 5 in vereinfachter Weise dargestellt. Bei dem in Fig. 5 gezeigten Konzept wird das empfangene Messsignal im Transponder 340 von einem Verstärker 170 verstärkt und nach einer gewissen Zeitverzögerung, welche über ein Laufzeitglied 172 realisiert ist, wieder über den Koppler 142 und die Antenneneinrichtung 126 in der Art eines Ringverstärkers ausgesandt.

Neben dem bisher beschriebenen Aufbau und der Funktionsweise eines Transponders für das erfindungsgemäße Verfahren ist zudem die Erweiterung des Transponders durch beispielsweise einen AC-Sensor (50 Hz-Sensor) und / oder einen induktiven Sensor möglich. Eine solche zusätzliche Funktion des Transponders ermöglicht dem Anwender, ein Beschädigen beispielsweise einer Stromleitung auch auf der dem Messgerät 12 abgewandten Seite, beispielsweise einer Wand, auszuschließen.

Die Auswertung der Informationen erfolgt in vorteilhafter Weise durch das Hoch-frequenzortungsgerät 12, welches mittels geeigneter Software- oder Hardwarebeschaltung in den Empfangsbetrieb geschaltet werden kann und so beispielsweise die Position einer Bohrung sowie die Wandstärke anzeigen kann.

Als Hochfrequenzortungsgerät für das erfindungsgemäße Verfahren lässt sich in vorteilhafter Weise ein Ortungsgerät auf Hochfrequenzbasis nutzen, wie es beispielsweise in der Anmeldung DE 102 07 424 A1 der Anmelderin beschrieben ist.

Zur Bestimmung eines ersten Messorts 20 wird die Laufzeit zwischen dem Hochfrequenzmessgerät 12 und einem Transponder, der beispielsweise in einer der vorgestellten Formen 40,140,240,340 aufgebaut ist, ausgewertet. Dabei wird das Messgerät 12 oder der Transponder solange über eine Oberfläche des Werkstoffs bewegt, bis sich ein Minimum in der Laufzeit vom Messgerät 12 hin zum Transponder und wiederum zurück in das Messgerät 12 ergibt. Auf diese Weise kann mit Hilfe des Messgeräts 12, welches ein Pulsreflektometer bildet, das Laufzeitminimum des Messsignals gefunden werden und die entsprechende Stelle auf der Wand beispielsweise markiert werden. Da die Dielektrizitätskonstante des Materials des Werkstoffs 10 nicht bekannt ist, kann aus dieser detektierten, minimalen Laufzeit nicht direkt auf die Dicke d des Werkstoffs 10 geschlossen werden, so dass eine zweite Messung an einem beabstandeten Messort 22 durchgeführt wird.

Bei einer verfahrensgemäßen Messung zur Bestimmung der Materialstärke d wird das Hochfrequenzmessgerät 12, wie in Fig. 1 angedeutet über die Oberfläche des Werkstoffs 10, beispielsweise einer Wand, verschoben. Das Hochfrequenzmessgerät 12 besitzt eine Wegsensorik 50, die über Wegaufnehmer den vom Messgerät zurückgelegten Weg s an eine Steuer- und Auswerteeinheit des Messgeräts übermitteln. Das Hochfrequenzmessgerät 12 besitzt dazu Wälzkörper, die beispielsweise in Form von Rädern 52 ausgebildet sind und einen Wegaufnehmer für die vom Hochfrequenzmessgerät 12 auf der Oberfläche der Wand zurückgelegten Strecke s bilden.

Bei dem erfindungsgemäßen Verfahren wird an einem zweiten Messort 22, der eine Strecke s vom ersten Messort 20 entfernt liegt, eine zweite Messung durchgeführt, bei der wiederum ein Messsignal 28 durch den Werkstoff 10 hindurch gesendet wird, vom Transponder detektiert und als rücklaufendes Messsignal 36 zurückgesendet, und vom Messgerät 12 wiederum detektiert und analysiert wird. Wird nun die Laufzeit des Messsignals zwischen dem als Pulsreflektormeter dienenden Hochfrequenzmessgerät und dem Transponder für zumindest diese beiden Messungen an den Messorten 20 bzw. 22 ausgewertet, so kann auf die Wanddicke d geschlossen werden, wie im folgenden kurz aufgezeigt werden soll.

Für die Dicke d des Werkstoffs 10 gilt die mathematische Beziehung (siehe Fig. 1):

$$d = s \,/\, \tan \alpha \qquad (1)$$

wobei s der Abstand zweier Messorte voneinander und $\alpha$ der Winkel zwischen den beiden Messorten und dem auf der gegenüberliegenden Seite 16 des Werkstoffs platzierten Transponder ist.

Des weiteren gilt für das rechtwinklige Dreieck, welches durch die beiden Messorte 20, 22 und die Lage des Transponders gebildet wird:

$$d' = s \,/\, \sin \alpha \quad \text{und} \quad \cos \alpha = d \,/\, d' \qquad (2),(3)$$

Die Laufzeit $t_L$ des Messsignals 28 zwischen dem Hochfrequenzmessgerät 12 und dem Transponder ist abhängig von der Dielektrizitätskonstanten $\varepsilon_r$ und der vom Messsignal zurückgelegten Strecke L, so dass gilt:

$$t_L = L * c_0 \,/\, \sqrt{\varepsilon_r} \qquad (4)$$

wobei $c_0$ die Lichtgeschwindigkeit bezeichnet. Dabei können dielektrische Verluste im Material 10 vernachlässigt werden, da diese nur das Signal dämpfen, jedoch nicht die Ausbreitungsgeschwindigkeit des Signals $(c_0 \,/\, \sqrt{\varepsilon_r})$ beeinflussen.

Da bei dem erfindungsgemäßen Verfahren weder die Wanddicke d, noch die Dielektrizitätskonstante $\varepsilon_r$ des Werkstoffs 10 bekannt sind, kann folgender Ansatz gemacht werden. Betrachtet man zwei verschiedene Wege durch den Werkstoff 10, die sich durch Messung an zwei unterschiedlichen Messorten 20 bzw. 22 ergeben, erhält man zwei unterschiedliche Laufzeiten für das jeweilige Messsignal in Abhängigkeit von dem zurückgelegten Weg und der Dielektrizitätskonstanten, die jedoch für beide Messungen konstant ist, bzw. als konstant angesehen wird. Es gilt somit:

$$t_{L20} = d * c_0 \,/\, \sqrt{\varepsilon_r} \quad \text{bzw.} \quad t_{L22} = d' * c_0 \,/\, \sqrt{\varepsilon_r} \qquad (5)$$

Aus den Gleichungen (5) ergibt sich Gleichung (3) zu:

$$\cos \alpha = t_{L20} \,/\, t_{L22} \qquad (6)$$

so dass sich die gesuchte Materialstärke bzw. -dicke d des Werkstoffs 20 mit Gleichung (1) ergibt zu

$$d = \frac{s}{\tan(ar\cos(t_{L20}/t_{L22}))} \qquad (7)$$

Die Wandstärke d ergibt sich somit aus dem Verfahrweg s des Hochfrequenzmessgeräts zwischen den Messorten 20-bzw. 22 und der Laufzeit der Signale $t_{L20}$ bzw. $t_{L22}$ zwischen dem Hochfrequenzmessgerät und dem Transponder. Die Laufzeiten können so genau bestimmt werden, da die Laufzeit der Signale sich aus der Laufzeit durch die Wand 10 und einer internen Laufzeit im Transponder aufgrund der Signalverarbeitung zusammensetzt. Die Zeit im Transponder ist schaltungstechnisch bedingt und bekannt. So können die Laufzeiten $t_{L20}$ bzw. $t_{L22}$ durch den Werkstoff 10 aus der mit der erfindungsgemäßen Vorrichtung gemessenen Laufzeit ermittelt werden.

In vorteilhafter Weise ermöglicht das erfindungsgemäße Verfahren über die Auswertung der Laufzeit zwischen dem Hochfrequenzmessgerät und einem Transponder eine Wanddickenbestimmung. Hierbei weist der Transponder eine kostengünstige Schaltung zur Detektion sehr kleiner und zeitlich kurzer Hochfrequenzpulse sowie zur reproduzierbaren Aussendung eines aktiv erzeugten "Reflex-Pulses" mit vergleichbarem Spektrum auf.

Das erfindungsgemäße Verfahren sowie die erfindungsgemäße Vorrichtung zur Durchführung dieses Verfahrens sind nicht auf die in den Ausführungsbeispielen aufgezeigten Ausführungsformen beschränkt.

**Patentansprüche**

1. Verfahren zur werkstoffdurchdringenden Materialstärkenbestimmung, insbesondere ein Verfahren zur Vermessung der Dicke von Wänden, Decken und Böden, bei dem mittels eines Hochfrequenzsenders (24) ein Messsignal (28) im Gigahertz-Frequenzbereich den zu untersuchenden Werkstoff (10) zumindest einmal durchdringt und von einem Hochfrequenzempfänger (38) detektiert wird, wobei die Materialstärke (d) des Werkstoffes (10) aus zumindest zwei Laufzeitmessungen des Messsignals, gemessen an verschiedenen Orten (20,22) des Hochfrequenzsenders (24) und / oder des Hochfrequenzempfängers (34), ermittelt wird, **dadurch gekennzeichnet, dass** der Hochfrequenzsender (24) und der Hochfrequenzempfänger (38) auf einer gemeinsamen, ersten Oberfläche (14) des Werkstoffes (10) betrieben werden, und das Messsignal (28) des Hochfrequenzsenders (24) mittels eines Reflektormittels (18) auf den Hochfrequenzempfänger (38) zurückgelenkt wird.

2. Verfahren nach Anspruch 1, **dadurch gekennzeichnet, dass** das Reflektormittel (18) einen Transponder (40,140,240,340) umfasst.

3. Verfahren nach Anspruch 1 oder 2, **dadurch gekennzeichnet, dass** der Hochfrequenzsender (24) und der Hochfrequenzempfänger (38) in einem gemeinsamen Gerät (12), insbesondere einem handgehaltenen Gerät betrieben werden.

4. Verfahren nach Anspruch 3, **dadurch gekennzeichnet, dass** das Messgerät (12) zur Aufnahme der mindestens zwei Laufzeitmessungen über eine Oberfläche (14) des Materials verschoben wird.

5. Verfahren nach Anspruch 4, **dadurch gekennzeichnet, dass** der Verschiebeweg (s) des Messgerätes (12) detektiert wird.

6. Verfahren nach Anspruch 1, dadurch gekennzeichet, dass das Messsignal (28) im Gigahertz-Frequenzbereich mittels Pulsradar-Verfahren erzeugt und in den Werkstoff (10) einkoppelt wird.

7. Verfahren nach Anspruch 1 oder 6, **dadurch gekennzeichnet, dass** eine oder mehrere Messfrequenz(en) (28) in einem Intervall von 1000 MHz bis 5000 MHz, und vorzugsweise in einem Intervall von 1500 MHz bis 3500 MHz verwendet werden.

8. Vorrichtungssystem zur Durchführung des Verfahrens nach einem der Ansprüche 1 bis 7, **dadurch gekennzeichnet, dass** die Vorrichtung zumindest ein auf eine Oberfläche (14) eines Werkstoffes (10) aufsetzbares Hochfrequenzmessgerät (12), mit zumindest einem Hochfrequenzsender (24) und einen Hochfrequenzempfänger (38) sowie einen relativ zu diesem Hochfrequenzmessgerät beweglichen Transponder (40,140,240,340) umfasst.

9. System nach Anspruch 8, **dadurch gekennzeichnet, dass** das Hochfrequenzmessgerät (12) über eine Wegsensorik (50,52) zur Aufnahme eines Weges (s) verfügt.

**Claims**

1. Method for determining the thickness of a material by penetration, especially a method for measuring the thickness of walls, ceilings and floors, in which a measuring signal (28) emitted by a high-frequency emitter (24) in the gigahertz frequency range penetrates the material (10) to be examined at least once and is detected by a high-frequency receiver (38), wherein the thickness (d) of the material (10) is determined from at least two transit-time measurements of the measuring signal, measured at different locations (20, 22) of the high-frequency emitter (24) and/or the high-frequency receiver (34), **characterized in that** the high-frequency emitter (24) and the high-frequency receiver (38) are operated on a common, first surface (14) of the material (10), and the measuring signal (28) of the high-frequency emitter (24) is returned to the high-frequency receiver (38) by means of a reflector means (18).

2. Method according to Claim 1, **characterized in that** the reflector means (18) comprises a transponder (40, 140, 240, 340).

3. Method according to Claim 1 or 2, **characterized in that** the high-frequency emitter (24) and the high-frequency receiver (38) are operated in a common device (12), in particular a handheld device.

4. Method according to Claim 3, **characterized in that**, for recording the at least two transit-time measurements, the measuring device (12) is displaced over a surface (14) of the material.

5. Method according to Claim 4, **characterized in that** the displacement path (s) of the measuring device (12) is detected.

6. Method according to Claim 1, **characterized in that** the measuring signal (28) is generated in the gigahertz frequency range by means of a pulse radar process and coupled into the material (10).

7. Method according to Claim 1 or 6, **characterized in that** one or more measuring frequency (frequencies) (28) is/are used in an interval of 1000 MHz to 5000 MHz, and preferably in an interval of 1500 MHz to 3500 MHz.

8. Device system for carrying out the method according to one of Claims 1 to 7, **characterized in that** the device comprises at least one high-frequency measuring device (12), which can be placed onto a surface (14) of a material (10) and has at least one high-frequency emitter (24) and a high-frequency receiver (38) and also a transponder (40, 140, 240, 340) that is movable in relation to this high-frequency measuring device.

9. System according to Claim 8, **characterized in that** the high-frequency measuring device (12) has a displacement-sensing unit (50, 52) for recording a path (s).

**Revendications**

1. Procédé pour la détermination de l'épaisseur d'un matériau par pénétration de matière, en particulier procédé pour la mesure de l'épaisseur de murs, plafonds et planchers, dans lequel, à l'aide d'un émetteur haute fréquence (24), un signal de mesure (28) dans la plage de fréquences des gigahertz pénètre au moins une fois le matériau (10) à analyser et est détecté par un récepteur haute fréquence (38),
dans lequel l'épaisseur de matériau (d) du matériau (10) est déterminée à partir d'au moins deux,mesures de temps de propagation du signal de mesure, mesurées à différents endroits (20, 22) de l'émetteur haute fréquence (24) et/ou du récepteur haute fréquence (34),
**caractérisé en ce que** l'on fait fonctionner l'émetteur haute fréquence (24) et le récepteur haute fréquence (38) sur une première surface (14) commune du matériau (10) et **en ce que** le signal de mesure (28) de l'émetteur haute fréquence (24) est renvoyé à l'aide d'un moyen de réflexion (18) vers le récepteur haute fréquence (38).

2. Procédé selon la revendication 1, **caractérisé en ce que** le moyen de réflexion (18) comprend un transpondeur (40, 140, 240, 340).

3. Procédé selon la revendication 1 ou 2, **caractérisé en ce que** l'on fait fonctionner l'émetteur haute fréquence (24) et le récepteur haute fréquence (38) dans un appareil (12) commun, en particulier un appareil tenu à la main.

4. Procédé selon la revendication 3, **caractérisé en ce que** l'appareil de mesure (12) est déplacé sur une surface (14) du matériau pour l'enregistrement des au moins deux mesures de temps de propagation.

5. Procédé selon la revendication 4, **caractérisé en ce que** le trajet de déplacement (s) de l'appareil de mesure (12) est détecté.

6. Procédé selon la revendication 1, **caractérisé en ce que** le signal de mesure (28) dans la plage de fréquences des gigahertz est généré grâce à des procédés de radar à impulsions et est injecté dans le matériau (10).

7. Procédé selon la revendication 1 ou 6, **caractérisé en ce que** l'on utilise une ou plusieurs fréquence(s) de mesure (28) dans un intervalle de 1000 MHz à 5000 MHz, et de préférence dans un intervalle de 1500 MHz à 3500 MHz.

8. Système de dispositif pour la mise en oeuvre du procédé selon l'une des revendications 1 à 7, **caractérisé en ce que** le dispositif comprend au moins un appareil de mesure haute fréquence (12), pouvant être posé sur une surface (14) d'un matériau (10), avec au moins un émetteur haute fréquence (24) et un récepteur haute fréquence (38) ainsi qu'un transpondeur (40, 140, 240, 340) mobile par rapport à cet appareil de mesure haute fréquence.

9. Système selon la revendication 8, **caractérisé en ce que** l'appareil de mesure haute fréquence (12) dispose de capteurs de trajet (50, 52) pour l'enregistrement d'un trajet (s).

# Fig. 1

Fig. 2

Fig. 3

## Fig. 4

126 ∿ Y    142    240

A / D in    164

Takt

D / A out

## Fig. 5

126 ∿ Y    142    340

172    170

**IN DER BESCHREIBUNG AUFGEFÜHRTE DOKUMENTE**

**In der Beschreibung aufgeführte Patentdokumente**

- US 5434500 A
- DE 3446392 A1

- WO 9630771 A
- DE 10207424 A1